# EUROPÄISCHE PATENTSCHRIFT

(11) **EP 2 230 617 B1**
(45) Veröffentlichungstag und Bekanntmachung des Hinweises auf die Patenterteilung: **25.07.2012**
(21) Anmeldenummer: 10002690.5
(22) Anmeldetag: 15.03.2010
(51) Int. Cl.: G06F 21/00

(54) **Sperren eines portablen Datenträgers**
Blocking a portable data carrier
Verrouillage d'un support de données portable

(30) Priorität: 18.03.2009 DE 102009013852
(43) Veröffentlichungstag der Anmeldung: 22.09.2010
(73) Patentinhaber: Giesecke & Devrient GmbH, 81677 München (DE)
(72) Erfinder: Seemüller, Klemens, 85386 Eching (DE)

(56) Entgegenhaltungen:
- DE-A1- 10 322 671
- DE-A1- 10 324 419
- RAVI S ET AL: "Tamper resistance mechanisms for secure embedded systems" VLSI DESIGN, 2004. PROCEEDINGS. 17TH INTERNATIONAL CONFERENCE ON MUMBAI, INDIA 5-9 JAN. 2004, LOS ALAMITOS, CA, USA,IEEE COMPUT. SOC, US, Bd. 17th Conference, 1. Januar 2004 (2004-01-01), Seiten 605-611, XP002480356 ISBN: 978-0-7695-2072-8
- FRANÇOIS KOEUNE ET AL: "A Tutorial on Physical Security and Side-Channel Attacks" 1. Januar 2005 (2005-01-01), FOUNDATIONS OF SECURITY ANALYSIS AND DESIGN III LECTURE NOTES IN COMPUTER SCIENCE;;LNCS, SPRINGER, BERLIN, DE, PAGE(S) 78 - 108 , XP019018876 ISBN: 9783540289555 * Seiten 81,84,88 * * Seiten 100-102 *
- SKOROBOGATOV S P ET AL: "Optical fault induction attacks" CRYPTOGRAPHIC HARDWARE AND EMBEDDED SYSTEMS. INTERNATIONALWORKSHOP, XX, XX, 1. Januar 2003 (2003-01-01), Seiten 2-12, XP002266187

## Beschreibung

Die vorliegende Erfindung betrifft ein Verfahren auf einem portablen Datenträger zum Sperren des Datenträgers sowie einen derartigen portablen Datenträger.

Portable Datenträger, insbesondere Smart Cards, (U)SIM-Mobilfunkkarten, sichere Multimediakarten, Karten mit Bezahlfunktion oder dergleichen, können durch Analyse des Stromverbrauchs des Datenträgers während einer bestimmten physikalischen Einwirkung auf den Datenträger, z.B. während eines mit Laserlicht ausgeführten Lichtangriffs, kompromittiert werden, z.B. durch einen SPA- oder DPA-Angriff ("Simple Power Analysis" bzw. "Differential Power Analysis"). Ziel derartiger Angriffe ist es, die Funktionsweise des portablen Datenträgers derart zu stören, dass sicherheitsrelevante Daten durch Analyse des Stromverbrauchs erkannt werden können oder eine Sicherheitsprüfung des portablen Datenträgers umgangen werden kann.

Bei einer üblichen Maßnahme zur Abwehr derartiger Angriffe wird der betreffende Datenträger bei Erkennung eines Angriffsversuchs zumindest teilweise gesperrt und eine entsprechende Sperrmarkierung in den nichtflüchtigen Speicher des Datenträgers geschrieben. Dieser Schutzmechanismus kann jedoch von einem Angreifer gestört werden, da das Schreiben der Sperrmarkierung in den nichtflüchtigen Speicher einen erhöhten Stromverbrauch bewirkt und insofern durch eine Analyse des Stromverbrauchsverlaufs des Datenträgers, d. h. der "Stromsignatur" des Schreibprozesses, erkannt werden kann. Das Sperren des Datenträgers kann somit von einem Angreifer erkannt und z.B. durch Abschaltung der Spannungsversorgung des Datenträgers unterbunden werden.

DE 103 22 671 A1 offenbart eine Vorrichtung zum Erzeugen eines zusätzlichen Stromverbrauchs in einer Datenverarbeitungsvorrichtung. Die Datenverarbeitungsvorrichtung weist einen Prozessor und einen Speicher auf. Die Vorrichtung zum Erzeugen eines zusätzlichen Stromverbrauchs ist ausgebildet, um einen zusätzlichen Stromverbrauch einem Nutzstromverbrauch der Datenverarbeitungsvorrichtung ohne die Vorrichtung zum Erzeugen eines zusätzlichen Stromverbrauchs zu überlagern. Die Vorrichtung zum Erzeugen eines zusätzlichen Stromverbrauchs weist eine Einrichtung zum Erfassen, ob ein Zugriff des Prozessors auf den Speicher stattfindet oder nicht stattfindet, sowie eine Einrichtung zum Zugreifen auf den Speicher auf. Wenn die Einrichtung zum Erfassen detektiert, dass kein Zugriff des Prozessors auf den Speicher stattfindet, greift die Einrichtung zum Zugreifen auf den Speicher zu und erzeugt damit einen Stromverbrauch, der dem Nutzstromverbrauch überlagert ist.

DE 103 24 419 A1 offenbart eine Vorrichtung zum Manipulieren von in einem Cachespeicher enthaltenen Cacheinformationen. Die Cacheinformationen sind in einer Mehrzahl von Cachezeilen in dem Cachespeicher enthalten. Der Cachespeicher befindet sich in einer Datenverarbeitungsvorrichtung, die neben dem Cachespeicher auch einen Hauptspeicher aufweist. Die Vorrichtung zum Manipulieren besteht aus einer Einrichtung zum Bereitstellen eines Manipulationsauslösesignals zu aufeinanderfolgenden Zeitpunkten mit einer zufällig oder deterministisch bestimmten Periodizität sowie aus einer Einrichtung zum Ungültigmachen einer Cachezeile oder zum Überschreiben einer Cachezeile mit Hauptspeicherinformationen aus dem Hauptspeicher, ansprechend auf ein Erhalten des Manipulationsauslösesignals.

Ravi S. et al "Tamper resistance mechanisms for secure embedded systems", VLSI Design, 2004, Proceedings. 17th International Conference on Mumbai, India, 5-9 Jan. 2004, Los Alamitos, CA, USA, IEEE Comput. Soc., US, Bd. 17th Conference, 1. Januar 2004, Seiten 605-611, ISBN: 978-0-7695-2072-8 bietet einen Überblick über verschiedene Angriffe und erklärt, wie sie benutzt werden können um Sicherheitsfunktionen in einem eingebetteten System zu unterlaufen oder zu schwächen. Fälschungssicheres Design bezieht sich auf den Prozess des Designs einer Systemarchitektur und deren Implementierung, die vor Angriffen geschützt ist. Es werden Ansätze dargestellt, die vorgeschlagen wurden um ein fälschungssicheres eingebettetes System zu entwerfen, in Verbindung mit Beispielen von kommerziellen Produkten.

Francois Koeune et al, "A tutorial on physical security and side-channel attacks", 1. Januar 2005, Foundations of security analysis and design III; lecture notes in computer science; LNCS, Springer, Berlin, DE, Seiten 78 bis 108, ISBN 978-3-540-28955-5 offenbart, dass ein Zweig der Kryptographie sich auf die physikalischen Beschränkungen konzentriert, denen ein reales Kryptographiegerät gegenüber steht und versucht diese Grenzen zu bewerten, wie z.B. Laufzeiten, Energieverbrauch etc., um die Geheimnisse der Geräte aufzudecken. Dies führte zu implementations-spezifischen Angriffen, was oft dazu führte, dass diese viel wirksamer als die besten bekannten kryptoanalytischen Angriffe sind gegenüber einem zugrundeliegenden einfachen Beispiel als idealisiertes Objekt. Diese Schrift bietet einen Überblick über die Hauptangriffsarten und zeigt die ihnen zugrunde liegenden Prinzipien auf.

Aufgabe der vorliegenden Erfindung ist es daher, ein zuverlässiges Sperren des Datenträgers bei einem Angriffsversuch sicherzustellen.

Diese Aufgabe wird durch ein Verfahren sowie einen Datenträger mit den Merkmalen der unabhängigen Patentansprüche gelöst. In den davon abhängigen Ansprüchen sind vorteilhafte Ausgestaltungen und Weiterbildungen der Erfindung angegeben.

Erfindungsgemäß werden auf einem portablen Datenträger Schreibzugriffe auf einen Speicher des Datenträgers zu beliebig aufeinander folgenden Schreibzeitpunkten fortwährend ausgeführt, wobei der Datenträger für den Fall, dass ein Angriffsversuch auf den Datenträger erkannt wird, mittels eines der fortwährend ausgeführten Schreibzugriffe zumindest teilweise gesperrt wird.

Entsprechend umfasst ein erfindungsgemäßer portabler Datenträger zumindest einen Prozessor, einen Speicher und eine Erkennungseinrichtung zur Erkennung von Angriffsversuchen auf den Datenträger, sowie eine Steuereinrichtung, die eingerichtet ist, zu beliebig aufeinander folgenden Schreibzeitpunkten fortwährend Schreibzugriffe auf den Speicher auszuführen und den Datenträger bei einem von der Erkennungseinrichtung erkannten Angriffsversuch zumindest teilweise mittels einer der fortwährend ausgeführten Schreibzugriffe zu sperren.

Durch diese Erfindung wird verhindert, dass ein Angreifer das Sperren des Datenträgers durch eine Analyse des Stromverbrauchsverlaufs des Datenträgers erkennt, da der Datenträger mittels eines Schreibzugriffs gesperrt wird, dessen Stromverbrauch in dem von den ohnehin fortwährend ausgeführten Schreibzugriffen verursachten Stromverbrauchsverlauf nicht detektierbar ist. Das heißt, der zum Sperren des Datenträgers erforderliche Schreibzugriff bewirkt einen ähnlich erhöhten Stromverbrauch wie die fortwährend ausgeführten Schreibzugriffe auf den Speicher, weshalb ein Angreifer nicht feststellen kann, ob und welcher der fortwährend ausgeführten Schreibzugriffe zum Sperren des Datenträgers verwendet wird.

Im Zusammenhang mit der vorliegenden Erfindung ist unter einem fortwährenden Ausführen von Schreibzugriffen ein zeitliches Muster von Schreibzugriffen zu verstehen, das nicht derart zeitlich auflösbar ist, dass ein Schreibzugriff zum Sperren des Datenträgers von anderen Schreibzugriffen unterscheidbar ist, z.B. als isolierter Schreibzugriff innerhalb eines längeren Intervalls ohne weitere Schreibzugriffe. Die fortwährende Ausführung von Schreibzugriffen bewirkt also eine Maskierung bzw. Verschleierung eines solchen Schreibzugriffs, der einem zumindest teilweisen Sperren des Datenträgers dient.

Ein solches nicht auflösbares zeitliches Muster von Schreibzugriffen ist insbesondere dann gegeben, wenn einerseits zwischen jeweils zwei der fortwährend ausgeführten Schreibzugriffe keine derart langen Zeitintervalle liegen, dass der Datenträger mit dem nächsten ohnehin vorgesehenen Schreibzugriff nicht mehr rechtzeitig zur Abwehr des erkannten Angriffsversuchs gesperrt werden kann, und anderseits ein unmittelbar nach einem erkannten Angriffsversuch eigens zum Sperren des Datenträgers ausgeführter Schreibzugriff innerhalb des zeitlichen Musters der fortwährend ausgeführten Schreibzugriffe nicht als Unregelmäßigkeit oder dergleichen erkennbar ist. Insbesondere ist vorgesehen, dass die Zeitintervalle zwischen jeweils zwei der fortwährend ausgeführten Schreibzugriffe kürzer sind als diejenige Zeitspanne, die ein Angreifer für einen Angriffsversuch mindestens benötigt (z.B. die Zeitspanne, die zum Stören des Datenträgers und unbefugtem Zugreifen auf dessen Daten benötigt wird), damit ein Angreifer die Selbstsperrung des Datenträgers nicht dadurch umgehen kann, dass er die Stromversorgung des Datenträgers bei jedem der fortwährenden Schreibzugriffe trennt.

Bevorzugt werden bei den fortwährend ausgeführten Schreibzugriffen Daten in einen nicht-flüchtigen Speicher des Datenträgers geschrieben. Durch Verwendung eines nicht-flüchtigen Speichers kann sichergestellt werden, dass eine zum Sperren des Datenträgers in den Speicher geschriebene Sperrmarkierung nicht durch eine Unterbrechung der Stromzufuhr eines flüchtigen Speichers wieder gelöscht werden kann. Bei dem nicht-flüchtigen Speicher handelt es sich insbesondere um einen EEPROM-Speicher oder einen Flash-Speicher.

Die einzelnen fortwährenden Schreibzugriffe werden vorzugsweise derart ausgeführt, dass ein Stromverbrauchsverlauf bewirkt wird, der demjenigen zeitlichen Stromverbrauchsverlauf möglichst ähnlich ist, der durch einen dem zumindest teilweisen Sperren des Datenträgers dienenden Schreibzugriff bewirkt wird, was durch eine geeignete Wahl der zu schreibenden Daten erreicht werden kann. Hierdurch wird sichergestellt, dass ein Angreifer einen Schreibzugriff zum zumindest teilweisen Sperren des Datenträgers nicht mittels einer genauen zeitlichen Analyse des Stromverbrauchsverlaufs des Datenträgers von den sonstigen fortwährend ausgeführten Schreibzugriffen unterscheiden kann.

Abgesehen von einem dem zumindest teilweisen Sperren des Datenträgers dienenden Schreibzugriff werden bei den fortwährend ausgeführten Schreibzugriffen vorzugsweise lediglich Leerschreibzugriffe auf den Speicher ausgeführt, die keinerlei zur Nutzung geeignete oder bestimmte Daten schreiben, sondern lediglich der Maskierung bzw. Verschleierung eines Schreibzugriffs zum Sperren des Datenträger dienen. Es können aber auch Schreibzugriffe sein, die durch eine vorhandene Applikation für die reguläre Funktionalität genutzt werden. Hierbei kann durch eine geeignete Wahl der nicht zur Nutzung geeigneten oder bestimmten Daten sichergestellt werden, dass die fortwährenden Schreibzugriffe einen Stromverbrauchsverlauf bewirken, der demjenigen Stromverbrauchsverlauf möglichst ähnlich ist, der durch einen dem zumindest teilweisen Sperren des Datenträgers dienenden Schreibzugriff bewirkt wird. Zum Beispiel kann bei einem Leerschreibzugriff eine unwirksame Sperrmarkierung in einen beliebigen Speicherbereich des Speichers geschrieben werden, um ein Schreiben einer wirksamen Sperrmarkierung in den Speicher unkenntlich zu machen. Im Extremfall kann es sich auch nur um einen Leerschreibzugriff handeln, der aber von der Applikation zur korrekten Funktionalität passiert werden muß.

Vorzugsweise werden bei dem zumindest teilweisen Sperren des Datenträgers potentiell ausführbare Applikationen temporär oder permanent gesperrt oder gerade ausgeführte Applikationen (d.h. deren Applikationsprozesse) temporär oder permanent suspendiert oder gesperrt oder beendet. Insbesondere werden sicherheitskritische Applikationen gesperrt, d.h. Applikationen, die die Sicherheit oder Integrität des Datenträgers und seiner Daten bzw. des berechtigten Besitzers des Datenträgers betreffen. Bevorzugt werden die während des erkannten Angriffsversuchs ausgeführten Applikationsprozesse gesperrt, da diese Ziel des Angriffsversuchs sein könnten. Bei hohen Sicherheitsanforderungen kann es vorteilhaft sein, alle Applikationen bzw. alle ausgeführten Applikationsprozesse zu sperren. Je nach Sicherheitsanforderungen kann die Sperrung temporär sein, d.h. zeitlich begrenzt bis zu einem festen Zeitpunkt oder bis zu einem bestimmten Ereignis (z.B. Entsperrung durch Codeeingabe), oder dauerhaft, d.h. unwiderruflich.

Ebenso können bei dem zumindest teilweisen Sperren des Datenträgers bestimmte vorgegebene oder sämtliche Speicherzugriffe temporär oder permanent gesperrt werden, d.h. unspezifische Schreib- oder Lesezugriffe oder Zugriffe im Rahmen der Ausführung eines Applikationsprozesses oder derartige Zugriffe auf spezifische Speicherbereiche, Register oder Daten. Insbesondere können sicherheitskritische Speicherzugriffe gesperrt werden, die insbesondere die Integrität vertraulicher oder geheimer Daten des Datenträgers oder des berechtigten Besitzers betreffen. Bei hohen Sicherheitsanforderungen werden vorzugsweise alle Speicherzugriffe gesperrt.

Der Datenträger ist bevorzugt mit einer Erkennungseinrichtung ausgestattet, die möglichst viele verschiedene Arten von physikalischen Angriffen auf den Datenträger erkennt, z.B. Lichtangriffe, Angriffe durch Einwirkung von extremen Temperaturen, Strahlung oder dergleichen. Die Erkennungseinrichtung selbst ist bevorzugt als Hardware oder als Software oder als Kombination aus Hardware und Software ausgeführt. Die Steuereinrichtung empfängt bei einem erkannten Angriffsversuch ein entsprechendes Signal der Erkennungseinrichtung und sperrt daraufhin den Datenträger mit dem nächsten der fortwährend ausgeführten Speicherzugriffe. Besonders bevorzugt wird der Datenträger gesperrt, falls ein Angriffsversuch in Form eines Lichtangriffs erkannt wird, da Lichtangriffe verhältnismäßig einfach auszuführen sind und ein häufig auftretendes und bedeutendes Sicherheitsrisiko darstellen. Insofern wird der Datenträger besonders bevorzugt mittels des unmittelbar auf das Erkennen des Angriffsversuchs folgenden, von der Steuereinrichtung bewirkten Schreibzugriffs gesperrt, um den Datenträger möglichst umgehend vor dem Angriffsversuch zu schützen.

Die fortwährend ausgeführten Schreibzugriffe können insbesondere zu fest vorgegebenen oder zufällig bestimmten Schreibzeitpurikten von der Steuereinrichtung ausgeführt werden. Zum Beispiel kann ein regelmäßiges oder möglichst unregelmäßig erscheinendes Muster von Schreibzugriffen fest vorgegeben werden oder die Länge des Zeitintervalls bis zum Ausführen des nächsten Schreibzugriffs durch einen Zufallsprozess bestimmt werden.
Falls die Schreibzeitpunkte mittels eines Zufallsprozesses festgelegt werden, braucht der Schreibzeitpunkt, zu dem der Datenträger nach Erkennen eines Angriffsversuchs mittels eines der fortwährenden Schreibzugriffe gesperrt wird, nicht durch den Zufallsprozess bestimmt werden, sondern kann z.B. möglichst kurz nach dem Zeitpunkt des Erkennens des Angriffsversuchs liegen.

Ebenso ist es möglich, die Schreibzugriffe zu Schreibzeitpunkten auszuführen, die von der Ausführung eines oder mehrerer bestimmter oder beliebiger Applikationsprozesses auf dem Datenträger abhängig sind. Insbesondere können die Schreibzugriffe bei jeder Ausführung eines bestimmten, eines beliebigen oder aller Kommandos durch einen Applikationsprozess ausgeführt werden. Hierbei ist zum Festlegen der Schreibzeitpunkte kein zusätzlicher technischer Aufwand, insbesondere keine zusätzliche Hardware erforderlich.

Der portable Datenträger ist vorzugsweise eine Smart-Card, eine (U)SIM-Mobilfunkkarte, eine sichere Multimediakarte, eine Karte mit Bezahlfunktion oder ein sonstiger derartiger portabler Datenträger. Vorzugsweise ist die Steuereinrichtung als Softwarekomponente, insbesondere als Teil eines Betriebssystems des Datenträgers realisiert, z.B. als Betriebssystemapplikation, Betriebssystembibliothek oder dergleichen. In diesem Fall kann das erfindungsgemäße Verfahren besonders einfach implementiert werden, ohne dass zusätzliche Hardware erforderlich wird.

Weitere Merkmale und Vorteile der Erfindung ergeben sich aus der folgenden Beschreibung von erfindungsgemäßen Ausführungsbeispielen sowie weiteren Ausführungsalternativen im Zusammenhang mit den Zeichnungen, die zeigen:
- Fig. 1: schematisch den Stromverbrauchsverlauf eines portablen Datenträgers (a) ohne einen Angriffsversuch und (b) mit einem erfindungsgemäß behandelten Angriffsversuch;
- Fig. 2: schematisch einen erfindungsgemäßen portablen Datenträger.

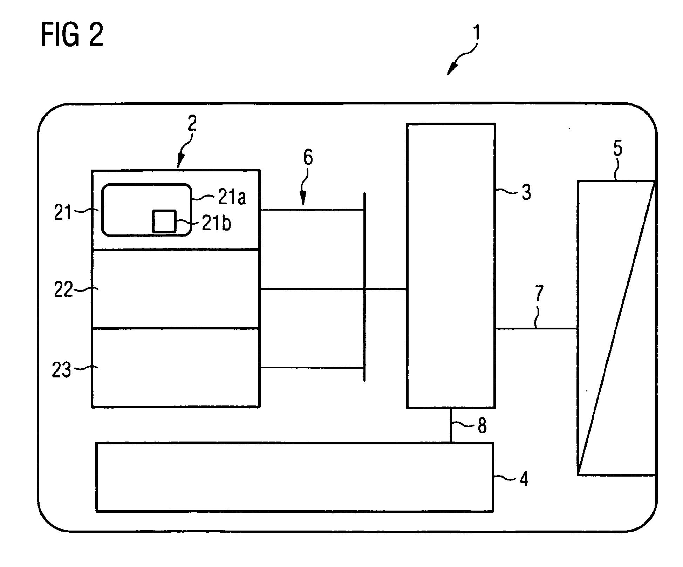

Fig. 2 zeigt schematisch einen erfindungsgemäßen portablen Datenträger 1, z.B. eine Smart-Card, eine (U)SIM-Mobilfunkkarte, eine sichere Multimediakarte, eine Karte mit Bezahlfunktion oder einen sonstigen derartigen portablen Datenträger 1. Der Datenträger 1 umfasst eine Speichereinheit 2, einen Prozessor 3, eine Erkennungseinrichtung 4 zur Erkennung von Angriffsversuchen und eine Kommunikationsschnittstelle 5, wobei die Speichereinheit 2 einen permanenten ROM-Speicher 21 mit dem Betriebssystem 21a des Datenträgers 1, einen nicht-flüchtigen EEPROM- oder Flash-Speicher 22 sowie einen flüchtigen RAM-Speicher 23 umfasst. Des Weiteren umfasst der portable Datenträger 1 Datenbusse 6, 7, 8, mittels derer der Prozessor 3 bidirektional mit der Speichereinheit 2, der Erkennungseinrichtung 4 und der Kommunikationsschnittstelle 5 kommunizieren kann.

Die Erkennungseinrichtung 4 zur Erkennung von Angriffsversuchen ist in dem vorliegenden Ausführungsbeispiel als separate Einrichtung ausgestaltet. Alternativ dazu kann die Erkennungseinrichtung 4 auch durch eine in der Speichereinheit 2 gespeicherte Applikation oder Betriebssystemfunktion realisiert sein. Die Erkennungseinrichtung 4 ist eingerichtet, beliebige physikalische Angriffe auf den Datenträger 1, insbesondere auf Strahlungseinwirkung basierende Angriffe, z.B. Lichtangriffe, zu erkennen.

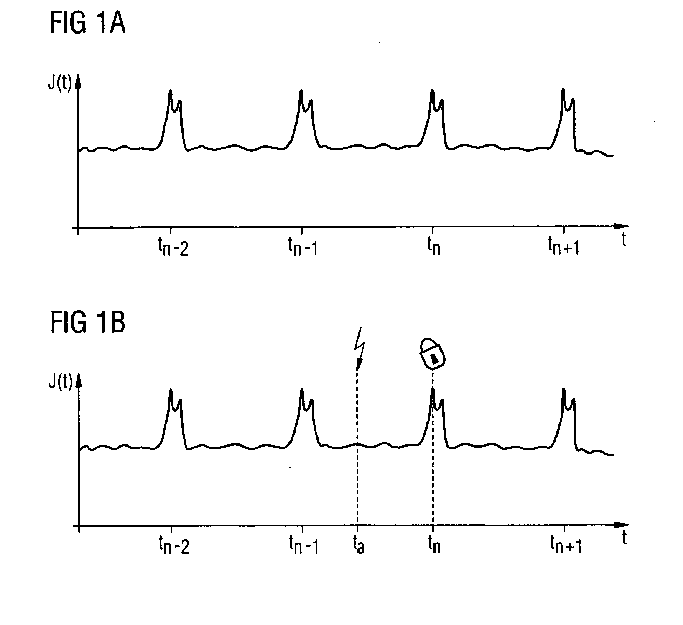

Der Datenträger 1 umfasst auch eine Steuereinrichtung 21b, die, wie in Fig. 1a gezeigt, zu beliebig aufeinander folgenden Schreibzeitpunkten tₙ₋₂ tₙ₋₁, tₙ, tₙ₊₁ fortwährend Schreibzugriffe auf den nicht-flüchtigen Speicher 22 ausführt. Sofern, wie in Fig. 1b zum Zeitpunkt tₐ durch einen Blitz illustriert, ein Angriffsversuch stattfindet und durch die Erkennungseinrichtung 4 erkannt wird, wird der Datenträger 1 nicht sofort durch einen entsprechenden Schreibzugriff auf den nicht-flüchtigen Speicher 22 von der Steuereinrichtung 21b gesperrt, da eine solche unmittelbarere Sperrung als außerplanmäßiger bzw. unregelmäßiger Schreibzugriff durch eine Analyse des Stromverbrauchsverlaufs des Datenträgers 1 durch den Angreifer erkannt werden könnte. Vielmehr sperrt die Steuereinrichtung 21b den Datenträger 1 mittels des nächsten regulären der fortwährend ausgeführten Schreibzugriffe zum Zeitpunkt tₙ. Falls eine Sperrung mittels des nächsten auszuführenden Schreibzugriffs zum Zeitpunkt tₙ nicht möglich ist, z.B. weil der zeitliche Abstand zwischen dem erkannten Angriffsversuch und den nächsten regulären Schreibzugriff zu gering ist, um den sperrenden Schreibzugriff zu initiieren, kann die Sperrung auch mit dem übernächsten Schreibzugriff zum Zeitpunkt tₙ₊₁ erfolgen. Unabhängig von der konkreten Ausführungsform erfolgt der den Datenträger 1 sperrende Schreibvorgang so früh wie möglich nach Erkennung eines Angriffsversuchs.

Da der Schreibzugriff gemäß der in Fig. 1 illustrierten Ausführungsform zum Zeitpunkt tₙ jedoch auch ohne einen Angriffsversuch als Leerschreibzugriff stattfindet, kann ein Angreifer den zeitlichen Stromverbrauchsverlauf (Fig. 1b) des angegriffenen Datenträgers 1 bei Erkennen des Angriffsversuchs und Sperren des Datenträgers 1 zum Zeitpunkt tₙ nicht von dem Stromverbrauchsverlauf (Fig. 1a) des Datenträgers 1 unterscheiden, der ohne den Angriffsversuch stattfinden würde. Der Angreifer kann daher anhand des Stromverbrauchsverlaufs nicht feststellen, ob und wann die Steuereinrichtung 21b den Datenträger durch Schreiben einer Sperrmarkierung in den Speicher 22 sperrt. Die Selbstsperrung des Datenträgers 1 durch seine Steuereinrichtung 21b wird somit maskiert oder verschleiert.

Im vorliegenden Ausführungsbeispiel lässt sich insbesondere auch der zeitliche Stromverbrauchsverlauf, der durch den sperrenden Schreibprozess bewirkt wird, nicht von dem zeitlichen Stromverbrauchsverlauf unterscheiden, der durch einen der weiteren der fortwährend ausgeführten Schreibprozesse bewirkt würde. Hierdurch wird sichergestellt, dass ein Angreifer den sperrenden Schreibzugriff nicht mit Hilfe einer zeitlichen Analyse des Stromverbrauchsverlaufs des Datenträgers 1 während der Schreibzugriffe von den sonstigen fortwährenden Schreibzugriffen unterscheiden kann.

Um eine möglichst gute Übereinstimmung des Stromverbrauchsverlaufs eines sperrenden Schreibzugriffs und der weiteren (nicht sperrenden) fortwährend ausgeführten Schreibprozesse zu erreichen, wird jeweils dieselbe Menge an Daten geschrieben, d.h. bei einem Leerschreibzugriff werden genauso viele Bits in den Speicher 22 geschrieben, wie beim Schreiben einer Sperrmarkierung durch einen sperrenden Schreibzugriff geschrieben werden.

Insbesondere können bei allen der fortwährend ausgeführten Schreibprozesse dieselben Daten geschrieben werden, d.h. auch die nicht sperrenden Schreibzugriffe schreiben Sperrmarkierungen in den Speicher 22, die dann allerdings nicht wirksam sind, da sie z.B. nicht in den dafür vorgesehenen Speicherbereich geschrieben werden. Dadurch wird durch alle der fortwährend ausgeführten Schreibzugriffe ein nahezu identischer zeitlicher Stromverbrauchsverlauf bewirkt.

Da jedoch abhängig von dem Typ des Angriffsversuchs, des gerade ausgeführten Applikationsprozesses oder dergleichen gewählt werden kann, welche der Applikationen oder ausgeführten Applikationsprozesse oder Speicherzugriffe vollständig oder teilweise gesperrt werden, kann sich die Sperrmarkierung von Fall zu Fall unterscheiden. Daher werden bei den nicht sperrenden Leerschreibzugriffen jeweils Daten geschrieben, die lediglich eine ähnliche, nicht aber eine identische Bitfolge haben, wie diejenige, die von einem sperrenden Schreibprozess geschrieben wird. Diese von Leerschreibzugriffen zu schreibende Bitfolge wird zudem derart variiert, dass ein zum Sperren des Datenträgers 1 ausgeführter Schreibprozess nicht anhand des durch die jeweils geschriebene Bitfolge verursachten Stromverbrauchsverlaufs des Datenträgers 1 von nicht sperrenden Leerschreibzugriffen unterschieden werden kann. Mit den den Datenträger 1 sperrenden Leerschreibzugriffen werden also insbesondere keine Nutzdaten in den Speicher 22 geschrieben sondern lediglich Bitfolgen, die sich besonders gut zur Maskierung und Verschleierung eines sperrenden Schreibzugriffs eigenen.

Fig. 1 stellt den Stromverbrauchsverlauf des Datenträgers 1 exemplarisch dar. In der Realität kann der Stromverbrauchsverlauf des Datenträgers 1 natürlich komplexer sein als in Fig. 1a dargestellt, da dieser auch durch weitere Komponenten des Datenträgers 1 bzw. durch weitere auf dem Datenträger 1 ausgeführte Prozesse beeinflusst wird. Dies beeinträchtigt die Erfindung jedoch nicht.

Bei dem Sperren des Datenträgers 1 durch die Steuereinrichtung 21b zum Zeitpunkt tₙ in Fig.1b werden ausführbare Applikationen oder ausgeführte Applikationsprozesse oder bestimmte vorgegebene Speicherzugriffsarten oder Speicherzugriffe auf bestimmte Daten oder Speicherbereiche temporär oder permanent gesperrt. Insbesondere werden sicherheitskritische Applikationen oder Speicherzugriffe auf sicherheitskritische Daten gesperrt. Ebenso werden Applikationsprozesse, die während des Angriffsversuchs zum Zeitpunkt tₐ gerade ausgeführt werden, gesperrt, da insbesondere diese ein Ziel des Angriffsversuchs sein könnten. Weiterhin können auch alle Applikationen oder alle ausgeführten Applikationsprozesse oder alle Speicherzugriffe gesperrt werden, falls die Sicherheitsanforderungen an den Datenträger 1 dies verlangen. Ebenso in Abhängigkeit von etwaigen Sicherheitsanforderungen an den Datenträger 1 kann die Sperrung permanent und nur durch einen Hersteller oder eine ausgebende Stelle des Datenträgers 1 wieder aufhebbar sein, oder temporär, d.h. zeitlich begrenzt bis zu einem festen Zeitpunkt oder bis zu einem bestimmten Ereignis, wie z.B. der Entsperrung durch Codeeingabe oder dergleichen.

Die Zeitintervalle zwischen den Schreibzeitpunkten sind bei der in Fig. 1 illustrierten Ausführungsform annähernd gleich groß. Dies kann insbesondere dann der Fall sein, wenn die jeweiligen Schreibzeitpunkte nach einem vorgegebenen regelmäßigen Muster festgelegt werden. Ebenso ist es auch möglich, die Schreibzeitpunkte von einer Ausführung eines Applikationsprozesses auf dem Datenträger 1 abhängig zu machen. Die Schreibzeitpunkte können dann z.B. derart von einem Applikationsprozess abhängen, dass bei jeder Ausführung eines Kommandos durch den Applikationsprozess oder an festen Stellen im Programmablauf ein Schreibzugriff erfolgt. Ebenso können die Zeitintervalle zwischen diesen Schreibzeitpunkten auch variabel gestaltet werden, z.B. wenn die Schreibzeitpunkte mittels eines Zufallsprozesses bestimmt werden oder wenn die Schreibzeitpunkte nach einem festen Schema festgelegt werden, das möglichst variabel und willkürlich wirkt.

Sowohl in dem Fall, dass die Schreibzeitpunkte nach einem festen Schema festgelegt werden, d.h. dass die Schreibzugriffe planmäßig ausgeführt werden, als auch in dem Fall von zufällig bestimmten Schreibzeitpunkten kann das Sperren des Datenträgers 1 nicht an einem unerwarteten zeitlichen Stromverbrauchsverlauf, ausgelöst durch einen unerwarteten sperrenden Schreibzugriff, erkannt werden. Da zudem die Zeitintervalle zwischen den Schreibzugriffen kürzer sind als die Zeitspanne, die für einen Angriffsversuch mindestens benötigt wird, kann ein Angreifer die Selbstsperrung des Datenträgers auch nicht dadurch verhindern, dass er die Stromversorgung des Datenträgers 1 bei jedem der fortwährenden Schreibzugriffe (die er ggf. an dem zeitlichen Stromverbrauchsverlauf erkennt) unterbricht.

Für den Fall, dass die Schreibzeitpunkte der fortwährend ausgeführten Schreibzugriffe mittels eines Zufallsprozesses bestimmt werden, besteht gemäß einer besonderen Ausführungsvariante der Erfindung auch die Möglichkeit, denjenigen Schreibzeitpunkt, zu dem der sperrende Schreibzugriff erfolgt, gezielt derart zu wählen, dass der Datenträger 1 einerseits möglichst schnell nach dem Erkennen des Angriffsversuchs zumindest teilweise gesperrt wird und andererseits die Maskierung dieses sperrenden Schreibzugriffs durch die zu fortwährenden zufällig bestimmten Schreibzeitpunkten ausgeführten nicht sperrenden Schreibzugriffe gewahrt bleibt. Dazu wird bei dieser Ausführungsvariante ein Schreibzeitpunkt für den sperrenden Schreibzugriff gewählt, der mit hinreichender Wahrscheinlichkeit ein Ergebnis des Zufallsprozesses sein könnte und/ oder mit dem Zeitpunkt der Erkennung des Angriffsversuchs nicht in einer nachvollziehbaren Beziehung steht.

Bei einer weiteren Variante der Erfindung können anstatt der nicht sperrenden Schreibzugriffe auch beliebige andere Prozesse ausgeführt werden, die einen zeitlichen Stromverbrauchsverlauf bewirken, der dem durch den sperrenden Schreibprozess hervorgerufenen Stromverbrauchsverlauf hinreichend ähnlich ist. Beispielsweise kann ein Lastwiderstand oder eine andere Komponente des Datenträgers 1 entsprechend angesteuert werden. Dies kann insbesondere dann sinnvoll sein, wenn mit dem fortwährenden Ansteuern der anderen Komponente ein Nutzen verbunden ist oder wenn durch die fortwährend ausgeführten Schreibprozesse zu viele Ressourcen des Datenträgers (z.B. Rechenleistung eines Prozessors) beansprucht werden.

## Patentansprüche

1. Verfahren auf einem portablen Datenträger (1), umfassend ein Ausführen von Schreibzugriffen auf einen Speicher (2) des Datenträgers (1), **gekennzeichnet durch** die Schritte des
- fortwährenden Ausführens von Schreibzugriffen auf den Speicher (2) **durch** eine Steuereinrichtung des Datenträgers zu beliebig aufeinander folgenden Schreibzeitpunkten; und
- zumindest teilweisen Sperrens des Datenträgers (1) mittels eines der fortwährend ausgeführten Schreibzugriffe, sofern ein Angriffsversuch auf den Datenträger (1) erkannt wird
- wobei es sich bei den fortwährend ausgeführten Schreibzugriffen um Schreibzugriffe handelt, die **durch** eine vorhandene Applikation für die reguläre Funktionalität ausgeführt werden, wobei hier nicht zur Nutzung geeignete oder bestimmte Daten verwendet werden,
- wobei es sich bei den Daten um eine zu schreibende Bitfolge handelt, die derart variiert wird, dass ein zum Sperren des Datenträgers (1) ausgeführter Schreibprozess nicht anhand des **durch** die jeweils geschriebene Bitfolge verursachten Stromverbrauchsverlaufs des Datenträgers (1) von nicht sperrenden Schreibzugriffen unterschieden werden kann.

2. Verfahren nach Anspruch 1, **dadurch gekennzeichnet, dass** bei dem fortwährenden Ausführen von Schreibzugriffen Daten in einen nichtflüchtigen Speicher (22) des Datenträgers (1) geschrieben werden.

3. Verfahren nach einem der Ansprüche 1 bis 2, **dadurch gekennzeichnet, dass** bei den Datenträger (1) nicht teilweise sperrenden fortwährend ausgeführten Schreibzugriffen Leerschreibzugriffe auf den Speicher (2) ausgeführt werden.

4. Verfahren nach einem der Ansprüche 1 bis 3, **dadurch gekennzeichnet, dass** beim zumindest teilweisen Sperren des Datenträgers (1) ausführbare Applikationen und/ oder ausgeführte Applikationsprozesse temporär oder permanent gesperrt werden.

5. Verfahren nach einem der Ansprüche 1 bis 4, **dadurch gekennzeichnet, dass** beim zumindest teilweisen Sperren des Datenträgers (1) vorgegebene oder sämtliche Zugriffe auf den Speicher (2) temporär oder permanent gesperrt werden.

6. Verfahren nach einem der Ansprüche 1 bis 5, **dadurch gekennzeichnet, dass** der Datenträger (1) zumindest teilweise gesperrt wird, sofern ein Angriffsversuch in Form eines Lichtangriffs erkannt wird.

7. Verfahren nach einem der Ansprüche 1 bis 6, **dadurch gekennzeichnet, dass** der Datenträger (1) mittels des auf den erkannten Angriffsversuch folgenden Schreibzugriffs zumindest teilweise gesperrt wird.

8. Verfahren nach einem der Ansprüche 1 bis 7, **dadurch gekennzeichnet, dass** die Schreibzugriffe zu fest vorgegebenen oder zufällig bestimmten aufeinander folgenden Schreibzeitpunkten fortwährend ausgeführt werden.

9. Verfahren nach Anspruch 8, **dadurch gekennzeichnet, dass** die Schreibzugriffe zu Schreibzeitpunkten ausgeführt werden, die von einer Ausführung eines Applikationsprozesses auf dem Datenträger (1) abhängig sind.

10. Verfahren nach Anspruch 9, **dadurch gekennzeichnet, dass** die Schreibzugriffe bei jeder Ausführung eines Kommandos durch den Applikationsprozess ausgeführt werden.

11. Portabler Datenträger (1), umfassend einen Prozessor, einen Speicher (2), und eine Erkennungseinrichtung (4) zur Erkennung von Angriffsversuchen auf den Datenträger (1), **gekennzeichnet durch** eine Steuereinrichtung des Datenträgers (21b), die eingerichtet ist, zu beliebig aufeinander folgenden Schreibzeitpunkten fortwährend Schreibzugriffe auf den Speicher (2) auszuführen, und den Datenträger (1) zumindest teilweise mittels eines der fortwährend ausgeführten Schreibzugriffe zu sperren, sofern ein Angriffsversuch von der Erkennungseinrichtung (4) erkannt wird
- wobei es sich bei den fortwährend ausgeführten Schreibzugriffen um Schreibzugriffe handelt, die **durch** eine vorhandene Applikation für die reguläre Funktionalität ausgeführt werden, wobei hier nicht zur Nutzung geeignete oder bestimmte Daten verwendet werden,
- wobei es sich bei den Daten um eine zu schreibende Bitfolge handelt, die derart variiert wird, dass ein zum Sperren des Datenträgers (1) ausgeführter Schreibprozess nicht anhand des **durch** die jeweils geschriebene Bitfolge verursachten Stromverbrauchsverlaufs des Datenträgers (1) von nicht sperrenden Schreibzugriffen unterschieden werden kann.

12. Datenträger (1) nach Anspruch 11, **dadurch gekennzeichnet, dass** der Datenträger (1) ein Betriebssystem (21a) umfasst, welches seinerseits die Steuereinrichtung (21b) umfasst.

13. Datenträger (1) nach Anspruch 11 oder 12, **dadurch gekennzeichnet, dass** die Steuereinrichtung (21b) eingerichtet ist, ein Verfahren nach einem der Ansprüche 2 bis 10 auszuführen.

14. Datenträger (1) nach einem der Ansprüche 11 bis 13, **dadurch gekennzeichnet, dass** der portable Datenträger (1) eine Smart-Card, eine (U)SIM-Mobilfunkkarte, eine sichere Multimediakarte oder eine Karte mit Bezahlfunktion ist.

## Claims

1. A method on a portable data carrier (1), comprising an executing of write accesses to a memory (2) of the data carrier (1), **characterized by** the steps of
- continually executing write accesses to the memory (2) by a control device of the data carrier at arbitrarily consecutive writing times; and
- at least partially blocking the data carrier (1) by means of one of the continually executed write accesses, provided that an attempted attack on the data carrier (1) is recognized,
- whereby the continually executed write accesses are write accesses which are executed by a present application for the regular functionality, whereby data not suitable or determined for use are employed here,
- whereby the data are a bit string to be written, which is varied in such a way that a write process executed for blocking the data carrier (1) cannot be distinguished from non-blocking write accesses by the power consumption pattern of the data carrier (1) caused by the respectively written bit string.

2. The method according to claim 1, **characterized in that** upon the continual execution of write accesses, data are written into a non-volatile memory (22) of the data carrier (1).

3. The method according to either of claims 1 to 2, **characterized in that** upon the continually executed write accesses that do not partly block the data carrier (1), empty write accesses to the memory (2) are executed.

4. The method according to any of claims 1 to 3, **characterized in that** upon the at least partial blocking of the data carrier (1), executable applications and/or executed application processes are temporarily or permanently blocked.

5. The method according to any of claims 1 to 4, **characterized in that** upon the at least partial blocking of the data carrier (1), specified or all accesses to the memory (2) are temporarily or permanently blocked.

6. The method according to any of claims 1 to 5, **characterized in that** the data carrier (1) is at least partly blocked, provided that an attempted attack in the form of a light attack is recognized.

7. The method according to any of claims 1 to 6, **characterized in that** the data carrier (1) is at least partly blocked by means of the write access following the recognized attempted attack.

8. The method according to any of claims 1 to 7, **characterized in that** the write accesses are continually executed at firmly specified or randomly determined consecutive writing times.

9. The method according to claim 8, **characterized in that** the write accesses are executed at writing times which are dependent on an execution of an application process on the data carrier (1).

10. The method according to claim 9, **characterized in that** the write accesses are executed upon each execution of a command by the application process.

11. A portable data carrier (1) comprising a processor, a memory (2) and a recognition device (4) for recognizing attempted attacks on the data carrier (1), **characterized by** a control device of the data carrier (21b), which is adapted to continually execute write accesses to the memory (2) at arbitrarily consecutive writing times, and to block the data carrier (1) at least partly by means of one of the continually executed write accesses, provided that an attempted attack is recognized by the recognition device (4),
- whereby the continually executed write accesses are write accesses which are executed by a present application for the regular functionality, whereby data not suitable or determined for use are employed here,
- whereby the data are a bit string to be written, which is varied in such a way that a write process executed for blocking the data carrier (1) cannot be distinguished from non-blocking write accesses by the power consumption pattern of the data carrier (1) caused by the respectively written bit string.

12. The data carrier (1) according to claim 11, **characterized in that** the data carrier (1) comprises an operating system (21a) which in its turn comprises the control device (21b).

13. The data carrier (1) according to claim 11 or 12, **characterized in that** the control device (21b) is adapted to execute a method according to any of claims 1 to 11.

14. The data carrier (1) according to any of claims 11 to 13, **characterized in that** the portable data carrier (1) is a smart card, an (U)SIM mobile radio card, a secure multimedia card or a card with payment function.

## Revendications

1. Procédé sur un support de données portable (1), comprenant une exécution d'accès en écriture sur une mémoire (2) du support de données (1), **caractérisé par** les étapes de
- l'exécution continuelle d'accès en écriture sur la mémoire (2) par un dispositif de commande du support de données à des instants d'écriture consécutifs de manière quelconque; et
- le blocage au moins partiel du support de données (1) au moyen d'un des accès en écriture continuellement exécutés, dans la mesure où une tentative d'attaque du support de données (1) est dépistée
- les accès en écriture continuellement exécutés consistant en des accès en écriture qui sont exécutés par une application existante pour la fonctionnalité régulière, des données non appropriées on non destinées à l'exploitation étant ici employées,
- les données consistant en un train de bits à écrire qui est diversifié de telle sorte qu'un processus d'écriture exécuté pour bloquer le support de données (1) ne peut pas, au moyen de la courbe de consommation d'électricité du support de données (1) occasionnée par le train de bits respectivement écrit, être distingué d'avec des accès en écriture non bloquants.

2. Procédé selon la revendication 1, **caractérisé en ce que**, lors de l'exécution continuelle d'accès en écriture, des données sont écrites dans une mémoire non volatile (22) du support de données (1).

3. Procédé selon une des revendications de 1 à 2, **caractérisé en ce que**, lors d'accès en écriture continuellement exécutés ne bloquant pas partiellement le support de données (1), des accès en écriture vide sont exécutés sur la mémoire (2).

4. Procédé selon une des revendications de 1 à 3, **caractérisé en ce que**, lors du blocage au moins partiel du support de données (1), des applications exécutables et/ou des processus d'applications exécutés sont bloqués temporairement ou de manière permanente.

5. Procédé selon une des revendications de 1 à 4, **caractérisé en ce que**, lors du blocage au moins partiel du support de données (1), des accès prescrits ou tous les accès à la mémoire (2) sont bloqués temporairement ou de manière permanente.

6. Procédé selon une des revendications de 1 à 5, **caractérisé en ce que** le support de données (1) est bloqué au moins partiellement dans la mesure où une tentative d'attaque sous forme d'une attaque en lumière est dépistée.

7. Procédé selon une des revendications de 1 à 6, **caractérisé en ce que** le support de données (1) est bloqué au moins partiellement au moyen de l'accès en écriture consécutif à la tentative d'attaque dépistée.

8. Procédé selon une des revendications de 1 à 7, **caractérisé en ce que** les accès en écriture sont continuellement exécutés à des instants d'écriture consécutifs fermement prescrits ou aléatoirement déterminés.

9. Procédé selon la revendication 8, **caractérisé en ce que** les accès en écriture sont exécutés à des instants d'écriture qui dépendent d'une exécution d'un processus d'application sur le support de données (1).

10. Procédé selon la revendication 9, **caractérisé en ce que** les accès en écriture sont exécutés à chaque exécution d'une commande par le processus d'application.

11. Support de données (1), comprenant un processeur, une mémoire (2), et un dispositif de dépistage (4) destiné à dépister des tentatives d'attaque du support de données (1), **caractérisé par** un dispositif de commande du support de données (21b) qui est configuré pour exécuter continuellement des accès en écriture sur la mémoire (2) à des instants d'écriture consécutifs de manière quelconque, et bloquer au moins partiellement le support de données (1) au moyen d'un des accès en écriture continuellement exécutés, dans la mesure où une tentative d'attaque est dépistée par le dispositif de dépistage (4)
- les accès en écriture continuellement exécutés consistant en des accès en écriture qui sont exécutés par une application existante pour la fonctionnalité régulière, des données non appropriées on non destinées à l'exploitation étant ici employées,
- les données consistant en un train de bits à écrire qui est diversifié de telle sorte qu'un processus d'écriture exécuté pour bloquer le support de données (1) ne peut pas, au moyen de la courbe de consommation d'électricité du support de données (1) occasionnée par le train de bits respectivement écrit, être distingué d'avec des accès en écriture non bloquants.

12. Support de données (1) selon la revendication 11, **caractérisé en ce que** le support de données (1) comprend un système d'exploitation (21 a) qui comprend quant à lui le dispositif de commande (21 b).

13. Support de données (1) selon la revendication 11 ou 12, **caractérisé en ce que** le dispositif de commande (21 b) est configuré pour exécuter un processus selon une des revendications de 2 à 10.

14. Support de données (1) selon une des revendications de 11 à 13, **caractérisé en ce que** le support de données portable (1) est une smartcard, une carte de téléphonie mobile (U)SIM, une carte multimedia sûre ou une carte avec fonction de paiement.
